**Europäisches Patentamt**

**European Patent Office**

**Office européen des brevets**

(19)

(11) Publication number: **0 180 297**
**B1**

# (12) EUROPEAN PATENT SPECIFICATION

(45) Date of publication of patent specification: **04.10.89**

(51) Int. Cl.⁴: **G 01 L 9/08**

(21) Application number: **85305665.3**

(22) Date of filing: **09.08.85**

(54) **Temperature compensation of a quartz oscillator pressure measuring apparatus.**

(30) Priority: **03.10.84 JP 207576/84**

(43) Date of publication of application:
**07.05.86 Bulletin 86/19**

(45) Publication of the grant of the patent:
**04.10.89 Bulletin 89/40**

(84) Designated Contracting States:
**DE FR GB**

(56) References cited:
**EP-A-0 086 462**
**EP-A-0 101 669**

(73) Proprietor: **SEIKO INSTRUMENTS INC.**
**31-1, Kameido 6-chome Koto-ku**
**Tokyo 136 (JP)**

(72) Inventor: **Tamura, Fujio**
**c/o Seiko Instruments & Electronics Ltd.**
**6-31-1 Kameido Koto-ku Tokyo (JP)**

(74) Representative: **Caro, William Egerton et al**
**J. MILLER & CO. Lincoln House 296-302 High**
**Holborn**
**London WC1V 7JH (GB)**

EP 0 180 297 B1

Courier Press, Leamington Spa, England.

## Description

This invention relates to pressure measuring apparatus, for example, barometers.

There is an urgent need in industry to be able to measure continuously gas pressure ranging from ambient pressure to 1.3 $10^{-1}$ Pa using a single sensor. One known pressure measuring apparatus utilises the phenomenon that the frequency at resonance of a quartz oscillator increases with decrease of pressure surrounding the quartz oscillator and this satifies to some extent the above industrial requirement. However, such a pressure measuring apparatus has the disadvantage that the lower limit of measurement is about 10 Torr. A heat conduction vacuum gauge such as a Pirani gauge has a lower limit of measurement of about 1.3 $10^{-2}$ to 1.3 $10^{-1}$ Pa but is disadvantageous because its upper limit of measurement is about 10 Torr.

It has been shown recently that the resonance resistance of a quartz oscillator also depends upon pressure surrounding the quartz oscillator over an extremely wide range. A pressure measuring apparatus which can continuously measure pressure ranging from ambient atmospheric pressure to 1.3 $10^{-1}$ Pa can be achieved by utilising this property. This is reported, for example, in "Development of Ultra-Miniature Vacuum Sensor Using Quartz Oscillator" in the magazine "Instrumentation", 1984, Vol. 27, No. 7, pages 19 to 21 (in Japanese).

However, a pressure measuring apparatus which utilises the pressure dependence of resistance of a quartz oscillator at resonance has the disadvantage that precise measurement cannot be readily effected because the resistance of the quartz oscillator at resonance varies markedly with temperature particularly in the relatively low pressure region of roughly 1.3 $10^{-1}$ to 1.3 Pa.

According to the present invention there is provided a pressure measuring apparatus comprising: a phase locked loop circuit including a variable frequency oscillator, and a quartz oscillator connected to the output of the variable frequency oscillator; a display conversion circuit connected to the phase locked loop circuit; and a display means connected to the display conversion circuit, the arrangement being such that the pressure to which the quartz oscillator is subject is determined from the value of resistance, current or voltage of the quartz crystal oscillator at resonance; characterised by a temperature-dependent device having a temperature characteristic opposite to that of the resistance, current or voltage of the quartz oscillator at resonance, and independent of pressure, the temperature dependent device being connected in series with the quartz oscillator.

In the preferred embodiment the pressure measuring apparatus comprises a parallel arrangement of a thermistor and a resistor. The resistor may be a variable resistor.

The phase locked loop circuit preferably includes a phase comparator, a low-pass filter and an amplifier.

The display conversion circuit may include a rectifier, an inverter and a buffer.

The invention is illustrated, merely by way of example, in the accompanying drawings, in which:—

Figure 1 is a diagram showing the relationship between resistance at resonsance, current at resonance, resonant frequency of a quartz oscillator and ambient pressure;

Figure 2 is a block diagram of a pressure measuring apparatus according to the present invention;

Figure 3 is a diagram showing the relationship between meter driving voltage and ambient temperature for the pressure measuring apparatus of Figure 2;

Figure 4 is a diagram showing the temperature characteristics of resistance of a quartz oscillator at resonance;

Figure 5 is a circuit diagram of part of the pressure measuring apparatus of Figure 2; and

Figure 6 is a diagram showing the temperature characteristics of a pressure measuring apparatus according to the present invention.

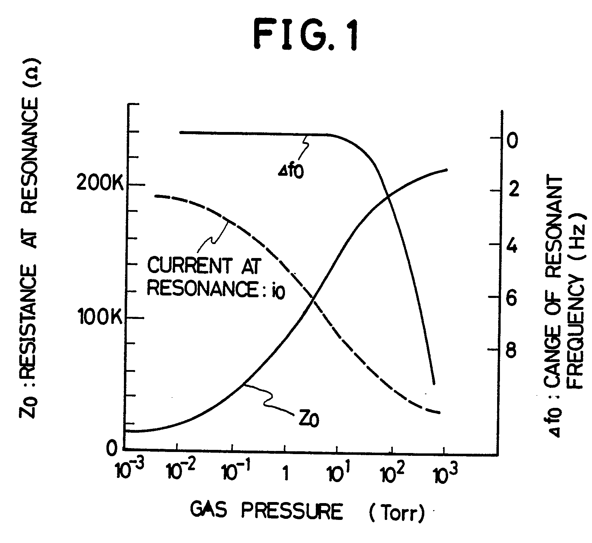

Figure 1 is a diagram showing the relationship between gas pressure and resistance at resonance, current at resonance and resonant frequency of a quartz oscillator. The resonant frequency starts changing when the pressure exceeds 1300 Pa but is virtually unaffected by pressure changes below 1300 Pa. However, the resistance of a quartz oscillator at resonance is sensitive to pressure ranging from ambient atmospheric pressure to 1.3 $10^{-1}$ Pa. When a quartz oscillator is driven by a constant voltage, a resonance current/pressure curve $i_0$ can be obtained. The resonance curve is sensitive to pressure ranging from ambient atmospheric pressure to 1.3 $10^{-1}$ Pa in the same way as the resistance at resonance. Therefore, it is easier to measure current at resonance or voltage at resonance than to measure resistance at resonance.

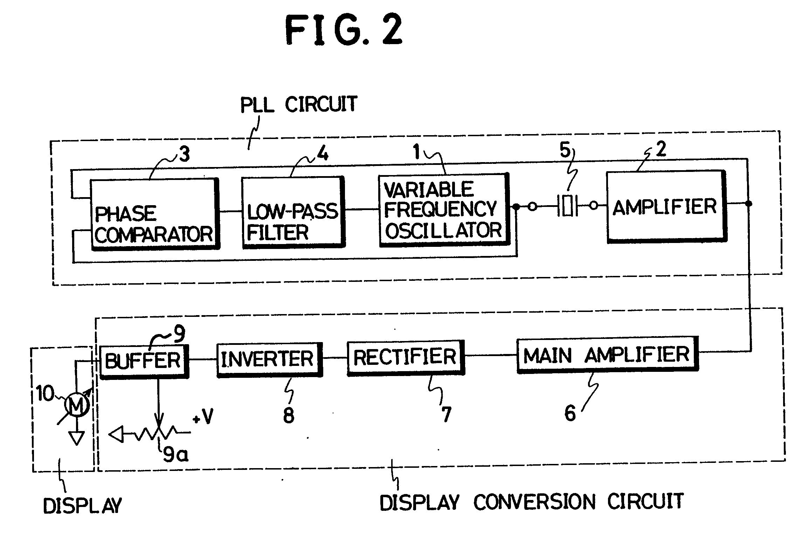

Figure 2 is a block diagram of a pressure measuring apparatus according to the present invention. The principal components of the pressure measuring apparatus are a phase locked loop (PLL) circuit, a display conversion circuit and a display device. The PLL circuit consists of a variable frequency oscillator 1 whose frequency of oscillation is controlled by the level of an input voltage or current, an amplifier 2 which amplifies the current of a quartz oscillator 5 at resonance as a voltage, a phase comparator 3 which compares the phase of the output signal of the amplifier 2 with that of the output signal of the variable frequency oscillator 1 and produces a signal proportional to the phase difference, and a low-pass filter 4 which converts a pulse form output signal of the phase comparator 3 to a d.c. voltage. The output voltage of the low-pass filter 4 controls the frequency of oscillation of the variable frequency oscillator 1. The pressure-sensitive quartz oscillator 1 is connected to the output terminal of the variable frequency oscillator 1 and the input terminal of the amplifier 2.

The principle of operation of the PLL circuit is well known and so will not be described. The output signal of the variable frequency oscillator 1 is controlled so that the phase difference between the output signal of the variable frequency oscillator 1, that is, the driving voltage of the quartz oscillator 5, and the output signal of the amplifier 2, that is, the current flowing through the quartz oscillator 5, is zero. Therefore the quartz oscillator 5 is always driven at its resonant frequency. This is significant in a pressure measuring apparatus according to the present invention because the resonant frequency of the quartz oscillator varies with pressure as shown in Figure 1.

The display conversion circuit consists of a main amplifier 6 which further amplifies the signal from the amplifier 2, a rectifier 7, which converts the output signal of the main amplifier 6 to d.c., an inverter 8 which inverts the polarity of the output voltage of the rectifier 7, and a buffer 9 which biases the output voltage of the inverter 8. The bias level of the buffer 9 can be controlled by a variable resistor 9a. The display device may be either digital or analog. In this embodiment, the display device consists of a meter 10, pressure being read from the deflection of an indicator of the meter.

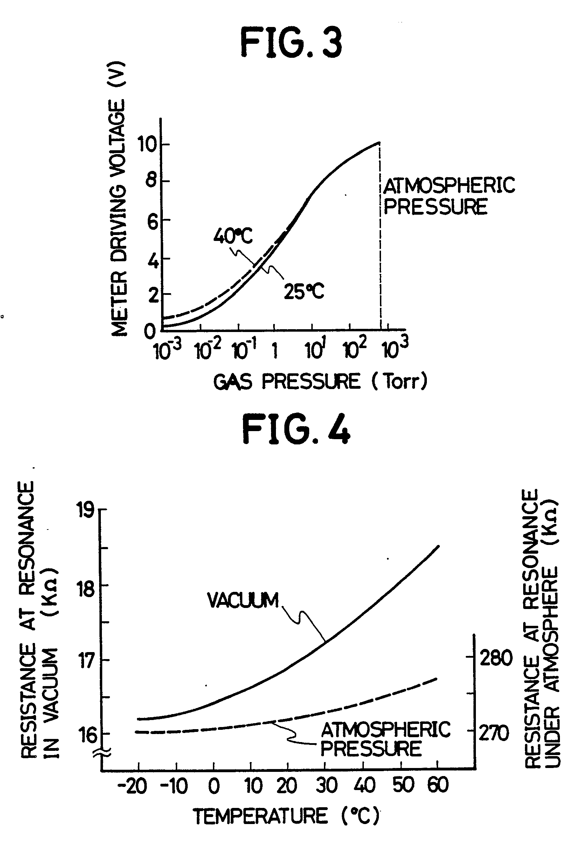

The pressure characteristics of the resonant current of the quartz oscillator are such that the current increases as ambient pressure decreases, as shown in Figure 1. Therefore, if the current at resonance is amplified as a voltage and is converted to d.c. to drive the meter 10, the deflection angle of the indicator of the meter will increase with decreasing pressure. Consequently the display will be the opposite of the detected pressure. This is obviously undesirable from the common sense point of view. Therefore, the inverter 8 inverts the polarity of the d.c. voltage, and the buffer 9 then applies the bias voltage so that the meter driving voltage shown in Figure 3 can be obtained. In the embodiment shown in Figure 3, the bias is adjusted so that the meter driving voltage is 10 V at ambient atmospheric pressure. In this manner, a conventional pressure display can be effected in which the deflection angle of the indicator of the meter increases as ambient atmospheric pressure increases and decreases as ambient atmospheric pressure decreases.

Figure 4 shows the temperature characteristics of resistance of the quartz oscillator at resonance. The degree of change of resistance at resonance due to temperature is relatively large in vacuum, and the resistance at resonance increases as temperature increases. Since most of the resistance at resonance at ambient pressure is frictional resistance, the resistance at resonance does not vary greatly with temperature. As a result, conventional pressure measuring apparatus involves the problem that the effect of temperature increases markedly as gas pressure decreases, thereby introducing an error into the measured value. The present invention provides means for minimising this error.

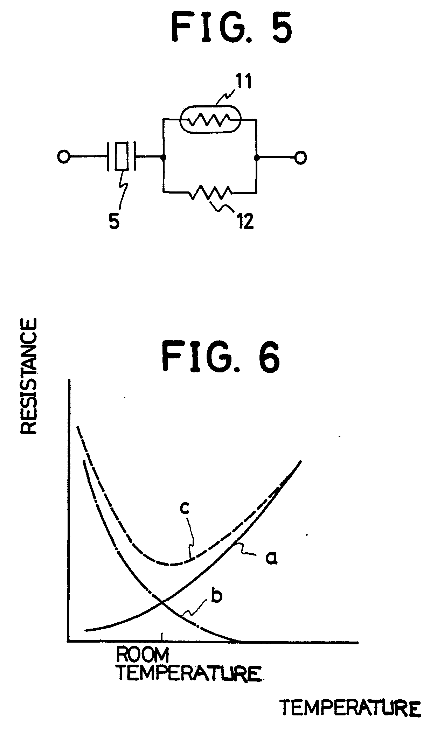

To this end, as shown in Figure 5, the pressure measuring apparatus of Figure 2 has a thermistor 11 and a resistor 12 connected in parallel and the parallel arrangement is connected in series between the quartz oscillator 5 and the amplifier 2. In Figure 6, a is a curve of the temperature characteristics of the resistanace at resonance of the quartz oscillator 5 at resonance, b is a curve of the temperature characteristics of the combined resistance of the thermistor 11 and the resistor 12, and c is a curve of the temperature characteristics of the combined resistance of the quartz oscillator, the thermistor and the resistor. The resistance of the quartz oscillator at resonance has a positive temperature coefficient, whereas a resistance of the thermistor has a negative temperature coefficient. If they are connected in series, therefore, the combined resistance value has a curve which has a valley or trough with respect to temperature. The resistor 12 is a variable resistor so that the temperature range of the valley or trough is at room temperature (20—30°C).

The resistance of the thermistor 11 is not affected by gas pressure around it: hence it can compensate for temperature independently of pressure. In the conventional pressure measuring apparatus where a thermistor is not provided to compensate for temperature change, the measured value of 1.3 Pa at 25°C varies by a maximum of 5.3 Pa if the ambient temperature varies from 10°C to 40°C. The provision of the thermistor compensates for temperature change and the measured value of 1.3 Pa at 25°C varies in the range of a maximum of 2.7 Pa with a pressure measuring apparatus according to the present invention. Thus the measurement error due to temperature change can be reduced by half. The practical temperature range in the environment of measurement is roughly 25±5°C. Since the resistor 12 can be adjusted to set a nominal temperature of measurement, e.g. 25°C, measurement error due to temperature variation can be drastically reduced in practice.

The pressure measuring apparatus according to the present invention and described above minimises the adverse effects of temperature variation upon the resistance of the quartz oscillator at resonance by extremely simple means, and can improve accuracy of measurement, particularly, in the low pressure range. Since the pressure measuring apparatus of the present invention is simple in construction, any increase in the production costs will be minimal.

The embodiment of the present invention described above uses a thermistor to compensate for temperature characteristics of resistance of a quartz oscillator at resonance. However, other devices can be employed if they have a temperature coefficient opposite to that of the resistance of the quartz oscillator at resonance.

## Claims

1. A pressure measuring apparatus comprising: a phase locked loop circuit including a variable frequency oscillator (1), and a quartz oscillator (5) connected to the output of the variable frequency oscillator; a display conversion circuit connected to the phase locked loop circuit; and a display means (10) connected to the display conversion circuit, the arrangement being such that the pressure to which the quartz oscillator is subject is determined from the value of resistance, current or voltage of the quartz crystal oscillator (5) at resonance; characterised by a temperature-dependent device (11, 12) having a temperature characteristic opposite to that of the resistance, current or voltage of the quartz oscillator (5) at resonance, and independent of pressure, the temperature dependent device being connected in series with the quartz oscillator (5).

2. An apparatus as claimed in Claim 1 characterised in that the temperature dependent device comprises a parallel arrangement of a thermistor (11) and a resistor (12).

3. An apparatus as claimed in Claim 2 characterised in that the resistor (12) is a variable resistor.

4. An apparatus as claimed in any preceding claim characterised in that the phase locked loop circuit includes a phase comparator (3), a low-pass filter (4) and an amplifier (2).

5. An apparatus as claimed in any preceding claim characterised in that the display conversion circuit includes a rectifier (7), an inverter (8) and a buffer (9).

## Patentansprüche

1. Druckmeßvorrichtung mit einer einen Oszillator (1) variabler Frequenz und einen an den Ausgang des Oszillators mit variabler Frequenz angeschlossenen Quarz-Oszillator (5) enthaltenden PLL-Schaltung, einer an die PLL-Schaltung angeschlossenen Anzeigewandlerschaltung und mit einer an die Anzeigewandlerschaltung angeschlossenen Anzeigeanordnung (10), wobei die Anordnung so getroffen ist, daß der auf den Quarz-Oszillator wirkende Druck aus dem Wert des Widerstandes, des Stromes oder der Spannung des Quarzkristall-Oszillators (5) bei Resonanz bestimmt wird, gekennzeichnet durch eine temperaturabhängige, druckunabhängige Anordnung (10, 12) mit einer zur Temperaturcharakteristik des Widerstandes, des Stromes oder der Spannung des Quarz-Oszillators (5) bei Rsonanz gegenläufigen Temperaturcharakteristik, die zum Qarz-Oszillator (5) in Reihe geschaltet ist.

2. Vorrichtung nach Anspruch 1, dadurch gekennzeichnet, daß die temperaturabhängige Anordnung durch eine Parallelschaltung eines Thermistors (11) und eines Widerstandes (12) gebildet ist.

3. Vorrichtung nach Anspruch 2, dadurch gekennzeichnet, daß der Widerstand (12) ein variabler Widerstand ist.

4. Vorrichtung nach den vorhergehenden Ansprüchen, dadurch gekennzeichnet, daß die PLL-Schaltung einen Phasenkomparator (3), ein Tiefpaßfilter (4) und einen Verstärker (2) enthält.

5. Vorrichtung nach den vorhergehenden Ansprüchen, dadurch gekennzeichnet, daß die Anzeigewandlerschaltung einen Gleichrichter (7), einen Inverter (8) und einen Puffer (9) enthält.

## Revendications

1. Un appareil de mesure de pression comprenant: un circuit consistant en une boucle de verrouillage de phase comprenant un oscillateur à fréquence variable (1) et un oscillateur à quartz (5) connecté à la sortie de l'oscillateur à fréquence variable; un circuit de conversion de visualisation connecté à la boucle de verrouillage de phase; et des moyens de visualisation (10) connectés au circuit de conversion de visualisation, la configuration étant telle qu'on détermine la pression à laquelle est soumis l'oscillateur à quartz, à partir de la valeur de résistance, de courant ou de tension de l'oscillateur à quartz (5) à la résonance, caractérisé par un dispositif dépendant de la température (11, 12), qui a une caractéristique de température opposée à celle de la résistance, du courant ou de la tension de l'oscillateur à quartz (5) à la résonance, et indépendante de la pression, le dispositif dépendant de la température étant connecté en série avec l'oscillateur à quartz (5).

2. Un appareil selon la revendication 1, caractérisé en ce que le dispositif dépendant de la température est constitué par une combinaison en parallèle d'une thermistance (11) et d'une résistance (12).

3. Un appareil selon la revendication 2, caractérisé en ce que la résistance (12) est une résistance variable.

4. Un appareil selon l'une quelconque des revendications précédentes, caractérisé en ce que la boucle de verrouillage de phase comprend un comparateur de phase (3), un filtre passe-bas (4) et un amplificateur (2).

5. Un appareil selon l'une quelconque des revendications précédentes, caractérisé en ce que le circuit de conversion de visualisation comprend un redresseur (7), un inverseur (8) et un amplificateur-séparateur (9).

# FIG. 1

# FIG. 2

PLL CIRCUIT

DISPLAY

DISPLAY CONVERSION CIRCUIT

EP 0 180 297 B1

# FIG. 3

METER DRIVING VOLTAGE (V)

ATMOSPHERIC PRESSURE

40°C

25°C

GAS PRESSURE (Torr)

# FIG. 4

RESISTANCE AT RESONANCE IN VACUUM (KΩ)

RESISTANCE AT RESONANCE UNDER ATMOSPHERE (KΩ)

VACUUM

ATMOSPHERIC PRESSURE

TEMPERATURE (°C)

# FIG. 5

# FIG. 6